# EUROPEAN PATENT APPLICATION

(11) **EP 2 984 926 A1**
(43) Date of publication of application: **17.02.2016**
(21) Application number: 14769113.3
(22) Date of filing: 14.03.2014
(51) Int. Cl.: A01K 61/00

(54) **METHOD FOR INCREASING INTRAMUSCULAR LIPID CONTENT IN REARED FISH, AND FEED THEREFOR**

(30) Priority: 21.03.2013 JP 2013057976
(71) Applicant: National University Corporation Tokyo University of Marine Science And Technology, Minato-ku Tokyo 108-8477 (JP); The University of Tokyo, Tokyo 113-8654 (JP)
(72) Inventor: OHBA, Moemi, Tokyo 113-8654 (JP); YOSHINAGA, Hazuki, Tokyo 113-8654 (JP); USHIO, Hideki, Tokyo 113-8654 (JP); KANEKO, Gen, Tokyo 113-8654 (JP); TAKAHASHI, Shin-Ichiro, Tokyo 113-8654 (JP); SATOH, Shuichi, Tokyo 108-8477 (JP)
(74) Representative: D Young & Co LLP
(86) International application number: PCT/JP2014/001466
(87) International publication number: WO 2014/148023

(57) **Abstract**

An object of the present invention is to provide a farmed fish or caught wild fish of a "fatty" state having satisfactory taste and texture by increasing the intramuscular lipid content of the farmed fish or caught wild fish for shipping the fish, and to provide a fish-rearing feed therefor. The object of the present invention is attained by providing farmed fish of a "fatty" state increased in intramuscular lipid content thereof by: preparing a fish-rearing feed for increasing the intramuscular lipid content of the fish, by satisfying the requirement of the amino acid necessary for fish growth with respect to the essential amino acids except lysine in a fish-rearing feed containing the essential amino acid requirements (necessary for fish growth) and adjusting the content of lysine (of the essential amino acids) in the feed to be equal to or less than the amino acid requirement (necessary for growth); and rearing fish while giving the fish-rearing feed during a period of 2 to 7 days before shipment within the rearing period (before shipment) for the farmed fish.

## Description

### Technical Field

The present invention relates to a method for increasing the intramuscular lipid content of farmed fish or caught wild fish by rearing them for shipping the fish and a fish-rearing feed therefor.

### Background Art

Recently, farming of fish has been actively carried out in this country and many studies have been conducted on the feed for farming. In preparing a feed for farming fish, it is important to add essential amino acids for fish as components of the feed. Since the essential amino acids cannot be biologically synthesized in a fish body, they must be externally supplied to fish as a feed for fish growth. Examples of the essential amino acids for fish include threonine (Thr), valine (Val), cysteine (Cys), methionine (Met), isoleucine (Ile), leucine (Leu), tyrosine (Tyr), phenylalanine (Phe), lysine (Lys), histidine (His) and arginine (Arg).

In farming fish, essential amino acid requirement necessary for growth of various important marine fishes have been researched by rearing tests and reported (Robert P. Wilson PROTEIN AND AMINO ACID REQUIRMENTS OF FISHES: Ann. Rev. Nutr. 6: 225-244, 1986). Furthermore, it has been reported that balance of essential amino acids in a fish feed influences growth of fish and biochemical indexes (Mar. Biotechnol., Vol. 14, No. 5 p643-654, 2012; Fisheries Sci. JST Vol. 68, No. 3, p509-516, 2002). In this report, it is informed that deficiency of, for example, arginine (Arg) and lysine (Lys) in a feed has a negative effect on the survival rate, daily growth rate, feed efficiency and protein accumulation of fish. In addition, the effect of the amount of essential amino acid in a feed on fish growth has been also reported. It has been reported that, for example, when seven feed samples different in lysine content were prepared, given to a trout and growth was observed for 12 weeks, the growth of the trout reached a plateau at 19 g/kg.

A method for accelerating e.g., growth of farmed fish by supplementation with essential amino acids to a feed in farming fish is also disclosed. For example, Japanese unexamined Patent Application Publication No. H7-31380 discloses a method for preparing a feed blend for growing fish at a satisfactory rate by supplementarily adding essential amino acids such as methionine, lysine and histidine to a feed blend for fish containing a feather meal and a fish meal as a protein source. Furthermore, Japanese unexamined Patent Application Publication No. H6-70694 discloses producing a feed for flounder farming, having a satisfactory feed efficiency by adding essential amino acids such as methionine and lysine, which tend to be deficit, to a flounder feed blend containing a plant-protein, i.e., soybean protein, as a major protein source. These feeds all are intended to accelerate growth of farmed fish by supplementation with essential amino acids necessary for fish growth to a feed blend for fish farming or quantitatively increasing the essential amino acids in the feed.

While farming of fish has been actively performed in recent years, studies on feeds have been conducted and a feed for accelerating growth of farmed fish has been developed. Conventionally in order to accelerate growth of farmed fish (in farming of fish), lipid has been added to a feed for farmed fish. Such a feed for farmed fish and containing fat in a high amount is disclosed in various publications (Japanese unexamined Patent Application Publication No. H8-38066, Japanese unexamined Patent Application Publication No. 2005-27613, Japanese unexamined Patent Application Publication (Translation of PCT Application) No. 2003-501106). However, when a high lipid-content feed is given (as a feed) to farmed fish (for rearing), the lipid is directly taken into a fish body. In this case, different from wild fish, the farmed fish containing a high-quality fat and oil cannot be obtained. In the case of wild fish, fish containing lipid in a high amount to some extent (referring to as "fatty" state) is evaluated as delicious taste; however, in the case of farmed fish, if a fatty ingredient is given by e.g., a high lipid-content feed, the level of body fat increases more than requires, with the result that the taste of the farmed fish significantly deteriorates, compared to wild fish. When farmed fish is compared to wild fish, the farmed fish generally contains a high amount of fat and meat tends to be too soft, for the reason of difference in growing environment. This is conceivably a reason why the taste of farmed fish is inferior to that of wild fish.

In order to improve the taste of farmed fish, a method of reducing the fat content of farmed fish by fasting the fish from 7 to 10 days before shipment is employed in the art. However, this method has the following problem: body weight reduces by fasting and commodity price reduces. Then, a method for improving the quality of meat of farmed fish by overcoming e.g. lipid accumulation has been investigated and disclosed. For example, Japanese Patent Publication No. 61-22936 discloses a method of preventing excessive intake of fat by adding a kind of zeolite such as mordenite and clinoptilolite to a fish-farming feed to trap ammonia and fat in the digestive organ by use of adsorption force of the zeolite. Japanese unexamined Patent Application Publication No. H7-87901 discloses a method for preventing accumulation of body fat in the muscle without suppressing growth of fish and shellfish by adding a meat quality improver for fish and shellfish, which contains a porous calcium silicate which has a hydrated silica solubilization rate of 25% or more and an amount of oil absorbed of 150 mL/100 g or more, as a main component, to a feed for farming fish and shellfish.

Japanese unexamined Patent Application Publication No. 2001-69923 discloses a method for reducing or removing greasiness intrinsic to farmed fish by adding green tea, a green tea extract or used tea leaves to a feed for farming fish to improve lipid of the farmed fish. However, these methods are directed to reducing the fat content of fish. Thus, the state of the farmed fish becomes different from the "fatty" state of wild fish. These methods are not necessarily satisfactory in view of providing farmed fish having taste like wild fish.

As described in the above, farming technologies and feeds for farming fish have been improved in various ways while fish farming has been actively performed in recent years; however, in view of providing farmed fish having taste corresponding to that of wild fish, a further improvement in farming technologies and feeds therefor is desired.

### Prior Art Documents

### Patent Documents

Patent Document 1: Japanese Patent Publication No. 61-22936.
Patent Document 2: Japanese unexamined Patent Application Publication No. 6-70694.
Patent Document 3: Japanese unexamined Patent Application Publication No. 7-31380.
Patent Document 4: Japanese unexamined Patent Application Publication No. 7-87901.
Patent Document 5: Japanese unexamined Patent Application Publication No. 8-38066.
Patent Document 6: Japanese unexamined Patent Application Publication No. 2001-69923.
Patent Document 7: Japanese unexamined Patent Application Publication No. 2005-27613.
Patent Document 8: Japanese unexamined Patent Application Publication (Translation of PCT Application) No. 2003-501106.

### Non Patent Documents

Non Patent Document 1: Ann. Rev. Nutr. 6: 225-244, 1986
Non Patent Document 2: Mar. Biotechnol., Vol. 14, No. 5 p643-654, 2012
Non Patent Document 3: Fisheries Sci. JST Vol. 68, No. 3, p509-516, 2002

### Summary of the Invention

### Object to be solved by the Invention

An object of the present invention is to provide farmed fish or caught wild fish of a "fatty" state having satisfactory taste and texture by increasing the intramuscular lipid content of the farmed fish or caught wild fish for shipping the fish, and to provide a fish-rearing feed therefor.

### Means to Solve the Object

The present inventors made intensive studies with a view to attaining the above object. During the studies, they focused on the relationship between essential amino acid requirements in farmed fish, and the sufficiency level of the essential amino acids in a feed. As a result, they found that the intramuscular lipid content of fish can be increased by rearing while giving a fish-rearing feed containing essential amino acid requirements (necessary for fish growth) in which the content of lysine (of the essential amino acids) in the feed is adjusted to be equal to or less than the amino acid requirement (necessary for growth), without feeding a high lipid feed as a feed. Based on the finding, the present invention was accomplished.

More specifically, the present invention includes providing farmed fish of a "fatty" state increased in intramuscular lipid content by: preparing a fish-rearing feed for increasing the intramuscular lipid content of the fish, by satisfying the requirement of the amino acid necessary for fish growth with respect to the essential amino acids except lysine in a fish-rearing feed containing the essential amino acid requirements (necessary for fish growth) and adjusting the content of lysine (of the essential amino acids) in the feed to be equal to or less than the amino acid requirement (necessary for growth); and rearing fish while giving the fish-rearing feed during a period of 2 to 7 days before shipment within the rearing period (before shipment) for the farmed fish. The method of the present invention can be applied not only to farmed fish but also to wild fish. Fish of the "fatty" state having satisfactory taste and texture can be provided by rearing the caught wild fish while giving the fish-rearing feed during a period of 2 to 7 days before shipment.

The method of the present invention for increasing the intramuscular lipid content of reared fish is a method for increasing the intramuscular lipid content of the fish by rearing without giving a high lipid feed. Thus, unlike conventional methods, accumulation of unnecessary fat and accumulation of fat due to added fat can be avoided and fat can be naturally accumulated like in natural rearing. As a result, farmed fish or caught wild fish of a "fatty" state having satisfactory taste and texture can be provided. In addition, the method of the present invention for increasing the intramuscular lipid content of reared fish employs a short-period rearing process using the fish-rearing feed of the present invention, more specifically, rearing fish while giving the fish-rearing feed during a period of 2 to 7 days before shipment. Because of the short-period rearing process, even if the amount of lysine (essential amino acid) in the feed is adjusted to be equal to or less than the amino acid requirement (necessary for growth), fish body weight is not affected and the intramuscular fat content of the fish body can be increased by 50% or more.

The mechanism of a phenomenon where fat is accumulated in the muscle of a fish body by the method of the present invention for increasing the intramuscular lipid content of reared fish, more specifically, by deficiency of lysine, is not specifically elucidated; however, oxidation of a fatty acid is conceivably involved therein. Carnitine for producing fatty acid carnitine, which is important in the step of fatty acid oxidation, is synthesized from lysine; whereas, carnitine supplies an acetyl group required for synthesis of e.g., acetylcholine. In the context, in normal oxidation of a fatty acid, carnitine is required to be always supplied in a constant amount. Probably, it is presumed that if short-period deficiency of lysine occurs, carnitine shortage temporality takes place and decomposition of a fatty acid, which always takes place in a normal condition, will not proceed, with the result that lipid is accumulated. Since lysine is a ketogenic amino acid (amino acid supplying a keto group), lysine is not participated in glycolysis and gluconeogenesis. From this, it is conceivable that the level of sugar metabolism is not significantly affected as long as other amino acids are sufficiently supplied. Accordingly, it is considered that short-period deficiency of lysine cannot affect body weight.

In the fish-rearing feed for increasing the intramuscular lipid content of the fish of the present invention, the content of lysine in the feed is preferably reduced to 20 to 50% of the amino acid requirement of lysine (the essential amino acid) necessary for growth. More specifically, provided that the requirement of lysine (amino acid) necessary for fish growth in a feed is 2.1 to 2.2 wt%, the content of lysine in a fish-rearing feed is preferably adjusted to 0.4 to 2.2 wt% per feed. The method of the present invention for increasing the intramuscular lipid content of reared fish can be applied to farmed fish or caught wild fish. Fish in the "fatty" state having satisfactory taste and texture can be provided by a short-period rearing process in which farmed fish or caught wild fish is reared while giving the fish-rearing feed of the present invention during a period of 2 to 7 days before shipment within the rearing period (before shipment) for the farmed fish or caught wild fish.

More specifically, the present invention includes:
[1] A fish-rearing feed for increasing an intramuscular lipid content of fish, containing essential amino acid requirement necessary for growth according to fish species, wherein the content of lysine of the essential amino acids in the feed is adjusted to be equal to or less than the amino acid requirement necessary for growth,
[2] The fish-rearing feed for increasing an intramuscular lipid content of fish according to [1], wherein the content of lysine in the feed is reduced to 20 to 50% of the amino acid requirement of the essential amino acids necessary for growth,
[3] The fish-rearing feed for increasing an intramuscular lipid content of fish according to [1] or [2], wherein the content of lysine in the fish-rearing feed is adjusted to 0.4 to 2.2 wt% per feed, and
[4] The fish-rearing feed for increasing an intramuscular lipid content of fish according to any one of [1] to [3], wherein the fish-rearing feed is a feed for rearing a farmed fish or caught wild fish for increasing the intramuscular lipid content of the fish.
   The present invention further includes
[5] A method for increasing an intramuscular lipid content of reared fish, comprising using the fish-rearing feed for increasing an intramuscular lipid content of the fish according to any one of [1] to [3], rearing the fish while giving the fish-rearing feed during the period of 2 to 7 days before shipment within the rearing period before shipment of a farmed fish or caught wild fish, thereby increasing the intramuscular lipid content of the farmed fish or caught wild fish.

### Effect of the Invention

The present invention makes it possible to increase the intramuscular fat content of a fish body by a brief process, which is a short-period rearing process in which farmed fish or caught wild fish is reared while giving the fish-rearing feed of the present invention during a period of 2 to 7 days before shipment, and which is applicable to a wide variety of fishes without affecting fish body weight. As a result, farmed fish or caught wild fish of a "fatty" state having satisfactory taste and texture can be provided. Also, the method of the present invention for increasing the intramuscular lipid content of reared fish is a method for increasing the intramuscular lipid content of the fish by rearing without giving a high-lipid feed. Thus, accumulation of unnecessary fat and accumulation of fat due to added fat can be avoided, unlike conventional methods, and fat can be naturally accumulated like in natural rearing. As a result, farmed fish or caught wild fish having satisfactory taste and texture can be provided.

### Mode of Carrying Out the Invention

The present invention includes providing farmed fish of a "fatty" state increased in intramuscular lipid content thereof by: preparing a fish-rearing feed for increasing the intramuscular lipid content of the fish, by satisfying the requirement of the amino acid necessary for fish growth with respect to the essential amino acids except lysine in a fish-rearing feed containing the essential amino acid requirements (necessary for fish growth) and adjusting the content of lysine (of the essential amino acids) in the feed to be equal to or less than the amino acid requirement (necessary for growth); and rearing fish while giving the fish-rearing feed during a period of 2 to 7 days before shipment within the rearing period (before shipment) for the farmed fish.

Examples of essential amino acids for fish include threonine (Thr), valine (Val), cysteine (Cys), methionine (Met), isoleucine (Ile), leucine (Leu), tyrosine (Tyr), phenylalanine (Phe), lysine (Lys), histidine (His), and arginine (Arg). The requirements of the essential amino acids necessary for fish growth can be obtained by the method of "PROTEIN AND AMINO ACID REQUIRMENTS OF FISHES" described in Ann. Rev. Nutr., 6: 225-244. The lysine requirement of fish is 2.0 to 5.0 wt%/feed. For example, 5.0 wt%/feed in the case of yellowtail (order *Perciformes,* family *Carangidae),* 4.4 wt%/feed in the case of red sea bream (order *Perciformes,* suborder *Percoidei,* family *Sparidae),* 4.6 wt%/feed in the case of flounder (order *Pleuronectiformes,* suborder *Pleuronectiformes,* family *Paralichthyidae),* 2.1 wt%/feed in the case of rainbow trout (Order *Salmoniformes,* family *Salmonidae)* and 2.2 wt%/feed in the case of carp (order *Cypriniformes,* family *Cypriniformes*) are lysine requirements.

In the fish-rearing feed for increasing the intramuscular lipid content of the fish according to the present invention, the content of lysine of the essential amino acids in the feed is adjusted to be equal to or less than the amino acid requirement. The content of lysine in the feed is preferably reduced to be 20 to 50% of the amino acid requirement necessary for growth of a target fish. The content of lysine in the feed is adjusted by controlling the blending ratio of a protein ingredient in a feed blend. In the feed blend usually used as a fish feed, the contents of essential amino acids necessary for fish growth are already contained. Thus, the content of lysine in the feed is adjusted by controlling the blending ratio of an ingredient rich in lysine in the feed blend. If the amounts of other essential amino acids become insufficient by such a control method, essential amino acids can be added in appropriate amounts. This is a simple method for controlling essential amino acids.

In the method of the present invention for increasing the intramuscular lipid content of reared fish, the intramuscular lipid content of farmed fish or caught wild fish can be increased by rearing the farmed fish or caught wild fish while giving the fish-rearing feed of the present invention during a period of 2 to 7 days before shipment within the rearing period (before shipment for the farmed fish or caught wild fish). In the present invention, the intramuscular lipid content of reared fish can be increased without reducing weight of a fish body in the short period before shipment as mentioned above by a rearing process using the feed of the present invention. If the rearing process is performed in a period longer than the aforementioned process period, for example, 20 days or more, fish die because essential amino acids become insufficient. The method of the present invention for increasing the intramuscular lipid content of reared fish can be applied to a wide variety of fishes. The intramuscular lipid content of a fish body can be increased by 50% or more by the method.

Now, the present invention will be described by way of Examples; however, the present invention is not limited to the examples.

### Example 1

A control feed and a test feed were prepared as shown in Table 2, based on amino acid requirements (Table 1) of rainbow trout.

**[Table 1]**

| < Amino acid requirement of rainbow trout (%) > | |
|---|---|
| **Thr** | **1.4** |
| **Val** | **1.3** |
| **Cys** | **0.4** |
| **Met** | **0.7** |
| **Ile** | **1.0** |
| **Leu** | **1.8** |
| **Tyr** | **0.8** |
| **Phe** | **1.2** |
| **Lys** | **2.1** |
| **His** | **0.6** |
| **Arg** | **1.4** |

**[Table 2]**

| < Composition of control feed and test feed (rainbow trout) (%) > | | |
|---|---|---|
| **Composition of diet for rainbow trout** | | |
| **Ingredient (g)** | **control** | **low Lys** |
| Anchovy | 45 | 5 |
| Defatted soybean meal (US product) | 0 | 10 |
| Soy protein concentrate | 0 | 0 |
| Blood meal | 0 | 4 |
| Feather meal | 0 | 0 |
| Corn gluten meal | 5 | 33 |
| Wheat flour | 17 | 17 |
| Pre-gelatinized starch | 5 | 5 |
| Fish oil | 5 | 7 |
| Soy bean oil | 10 | 10 |
| Vitamin mix | 3 | 3 |
| Choline chloride | 0.5 | 0.5 |
| Vitamin E | 0.1 | 0.1 |
| Mineral mix. | 1 | 1 |
| Mono calcium phosphate | 0 | 1 |
| Theronine | 0 | 0 |
| Cellulose | 8 | 3 |
| Total(g) | 100 | 100 |

The amino acid compositions of the feeds were determined by an amino acid analyzer. The amino acid compositions as shown in Table 3 were obtained. Each amino acid sufficiency level was calculated. It was found that Lys alone was significantly deficient, as shown in Table 4.

**[Table 3]**

| < Amino acid composition of control feed and test feed (rainbow trout) (%) > | | | |
|---|---|---|---|
| | **control** | **low Lys** | |
| Thr | 2.2 | 1.6 | |
| Val | 2.5 | 2.3 | |
| Cys | 0.3 | 0.3 | |
| Met | 0.9 | 0.7 | |
| Ile | 2.2 | 1.7 | |
| Leu | 4.1 | 5.7 | |
| Tyr | 1.3 | 1.7 | |
| Phe | 2.2 | 2.4 | |
| Lys | 3.4 | 0.6 | |
| His | 1.6 | 1.2 | |
| Arg | 2.6 | 1.5 | |

**[Table 4]**

| < Amino acid sufficiency level of control feed and test feed (rainbow trout) (%) > | | | |
|---|---|---|---|
| | **control** | **low Lys** | |
| Thr | 159 | 119 | |
| Val | 204 | 185 | |
| Cys | 82 | 76 | |
| Met | 126 | 99 | |
| Ile | 228 | 179 | |
| Leu | 231 | 326 | |
| Tyr | 149 | 198 | |
| Phe | 178 | 197 | |
| Lys | 158 | 28 | |
| His | 252 | 179 | |
| Arg | 188 | 107 | |

When these feeds were given to rainbow trout having a body length of about 23 cm and a body weight of about 200 g for 2 days and 7 days, no significant difference between the control group and the test group was observed with respect to each of body length and body weight, as shown in Table 5.

**[Table 5]**

| < Body length and body weight of rainbow trout fed with lysine deficient feed (mean ± standard deviation) > | | | |
|---|---|---|---|
| | **Control** | **Day2** | **Day7** |
| Standard body length **(cm)** | **23.7±0.5** | **23.2±0.7** | **24.0±0.4** |
| Body weight (g) | **210.0±8.9** | **202.4±9.3** | **217.5±15.9** |
| Significant difference | | None | None |

The whole lipid component was extracted from muscle and triacylglycerol was measured. In the group to which a lysine deficient feed was fed, the lipid content was significantly high according to the Kruskal Wallis test, as shown in Table 6.

**[Table 6]**

| < Lipid content in the muscle of rainbow trout fed with lysine deficient feed (%) > | | | |
|---|---|---|---|
| | **Control** | **Day2** | **Day7** |
| Average value | **1.5** | **2.2** | **3.1** |
| Standard deviation | **0.1** | **0.3** | **0.8** |
| **Kruskal Wallis test** | | **0.05** | **0.04** |

### Example 2

Based on the amino acid requirement (Table 7) of carp, which is a close relative of zebrafish, a control feed and a test feed were prepared as shown in Table 8.

**[Table 7]**

| < Amino acid requirement of carp (%) > | |
|---|---|
| **Thr** | **1.5** |
| **Val** | **1.4** |
| **Met** | **1.2** |
| **Ile** | **0.9** |
| **Leu** | **1.3** |
| **Phe** | **2.5** |
| **Lys** | **2.2** |
| **His** | **0.8** |
| **Arg** | **1.6** |

**[Table 8]**

| < Composition of control feed and test feed (zebrafish) (%) > | | | |
|---|---|---|---|
| Composition of feed | | | |
| | | (%) | |
| | control | Lys(-) | |
| casein | 70 | 0 | |
| corn gluten | 0 | 70 | |
| Cys | 0.9 | 0.9 | |
| Tau | 4.4 | 4.4 | |
| cod liver oil | 10 | 10 | |
| cornstarch | 10 | 10 | |
| vitamin mix | 1 | 1 | |
| mineral mix | 3.5 | 3.5 | |
| choline CI | 0.2 | 0.2 | |

The amino acid compositions of the feeds were determined by an amino acid analyzer. The amino acid compositions as shown in Table 9 were obtained. Each amino acid sufficiency level was calculated. It was found that Lys alone was significantly deficient, as shown in Table 10.

**[Table 9]**

| < Amino acid composition of control feed and test feed (zebrafish) (%) > | | | |
|---|---|---|---|
| Amino acid composition of feed | | | |
| | | (%) | |
| | **control** | **Lys(-)** | |
| Asp+Asn | 0.2 | 0.1 | |
| Thr | 2.8 | 1.7 | |
| Ser | 3.6 | 2.4 | |
| Glu+Gln | 11.2 | 8.3 | |
| Gly | 1.3 | 1.6 | |
| Ala | 2.1 | 4.6 | |
| Val | 4.5 | 2.6 | |
| Cys | 1.1 | 1.4 | |
| Met | 2.0 | 1.6 | |
| Ile | 3.7 | 2.3 | |
| Leu | 5.1 | 8.7 | |
| Tyr | 3.7 | 2.7 | |
| Phe | 4.7 | 3.4 | |
| Lys | 5.6 | 1.0 | |
| His | 2.1 | 1.0 | |
| Arg | 2.5 | 18 | |
| Pro | 0.4 | 0.3 | |
| Tau | 5.0 | 4.6 | |

**[Table 10]**

| < Amino acid sufficiency level of control feed and test feed (zebrafish) (%) > | | | |
|---|---|---|---|
| | control | low Lys | |
| Thr | 326 | 108 | |
| Val | 566 | 99 | |
| Met | 296 | 134 | |
| Ile | 719 | 110 | |
| Leu | 690. | 298 | |
| Phe | 331 | 125 | |
| Lys | 444 | 31 | |
| His | 449 | 90 | |
| Arg | 277 | 124 | |

When these feeds were given to zebrafish (n = 5) having a body weight of about 0.3 g in an amount of 10 mg per day for 3 days and 6 days, no significant difference between the control group and the test group was observed with respect to body weight of fish, as shown in Table 11.

**[Table 11]**

| < Body weight of zebrafish fed with lysine deficient feed (mean ± standard deviation) > | | | |
|---|---|---|---|
| Body weight of fish | | | |
| | (g, mean±SEM, n=5) | | |
| | control | Lys(-) | |
| 0 | 0.4±0.09 | | |
| 3 | 0.4±0.03 | 0.4±0.03 | |
| 6 | 0.5±0.04 | 0.4±0.02 | |
| Significant difference | None | None | |

The whole lipid component was extracted from muscle and triacylglycerol was measured. In the group to which a lysine deficient feed was fed, the lipid content was significantly high according to the Kruskal Wallis test, as shown in Table 12.

**[Table 12]**

| < Lipid content of the muscle of zebrafish fed with lysine deficient feed (%) > | | | |
|---|---|---|---|
| TAG contents in muscle | | | |
| | | (% wet tissue, mean±SEM, n=5) | |
| | control | Lys(-) | |
| 0 | 1.8±0.20 a | | |
| 3 | 1.4±0.38 a | 5.1±0.35 b | |
| 6 | 1.3±0.36 a | 4.2±0.43 b | |

### Industrial Applicability

The present invention provides farmed fish or caught wild fish of a "fatty" state having satisfactory taste and texture by a short-period rearing process in which farmed fish or caught wild fish is reared while giving the fish-rearing feed of the present invention during a period of 2 to 7 days before shipment, without affecting fish body weight. Also, the method of the present invention for increasing the intramuscular lipid content of reared fish is a method for increasing the intramuscular lipid content of the fish by rearing without giving a high-lipid feed. Thus, accumulation of unnecessary fat and accumulation of fat due to added fat can be avoided, unlike conventional methods, and fat can be naturally accumulated like in natural rearing. As a result, farmed fish or caught wild fish having satisfactory taste and texture can be provided.

## Claims

1. A fish-rearing feed for increasing an intramuscular lipid content of fish, containing essential amino acid requirement necessary for growth according to fish species, wherein the content of lysine of the essential amino acids in the feed is adjusted to be equal to or less than the amino acid requirement necessary for growth.

2. The fish-rearing feed for increasing an intramuscular lipid content of fish according to claim 1, wherein the content of lysine in the feed is reduced to 20 to 50% of the amino acid requirement of the essential amino acid necessary for growth.

3. The fish-rearing feed for increasing an intramuscular lipid content of fish according to claim 1 or 2, wherein the content of lysine in the fish-rearing feed is adjusted to 0.4 to 2.2 wt% per feed.

4. The fish-rearing feed for increasing an intramuscular lipid content of fish according to any one of claims 1 to 3, wherein the fish-rearing feed is a feed for rearing a farmed fish or caught wild fish for increasing the intramuscular lipid content of the fish.

5. A method for increasing an intramuscular lipid content of reared fish, comprising using the fish-rearing feed for increasing an intramuscular lipid content of the fish according to any one of claims 1 to 3, rearing the fish while giving the fish-rearing feed during the period of 2 to 7 days before shipment within the rearing period before shipment of a farmed fish or caught wild fish, thereby increasing the intramuscular lipid content of the farmed fish or caught wild fish.
